(19) Europäisches Patentamt
European Patent Office
Office européen des brevets

(11) **EP 4 530 074 A1**

(12) **EUROPEAN PATENT APPLICATION**

(43) Date of publication:
**02.04.2025 Bulletin 2025/14**

(21) Application number: **24198505.0**

(22) Date of filing: **04.09.2024**

(51) International Patent Classification (IPC):
***B41J 2/045*** *(2006.01)*

(52) Cooperative Patent Classification (CPC):
**B41J 2/04581; B41J 2/04508; B41J 2/04561**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.09.2023 JP 2023163565**

(71) Applicant: **RISO Technologies Corporation Tokyo 108-8385 (JP)**

(72) Inventors:
• **Nishida, Eiji**
  **Tokyo, 108-8385 (JP)**
• **Akimoto, Manabu**
  **Tokyo, 108-8385 (JP)**

(74) Representative: **Bandpay & Greuter**
**11 rue Christophe Colomb**
**75008 Paris (FR)**

(54) **SETTING VALUE DATA PROVIDING SYSTEM**

(57)    In an embodiment, a setting value data providing system includes a web server to receive, from a client device, drive condition parameters of an ink jet head and physical property parameters of an ink to be used by the ink jet head. The system further includes a setting value data calculation unit to estimate a suitable drive waveform for the ink jet head using a drive waveform estimation algorithm and the drive condition parameters and the physical property parameters of the ink and then calculate setting value data for generating the suitable drive waveform for the ink jet head. The web server outputs the calculated setting value data to the client device for use in a printer or the like incorporating the inkjet head.

*FIG. 5*

**Description**

FIELD

An embodiment described herein relates generally to a setting value data providing system.

BACKGROUND

A liquid ejection device including an inkjet head generally forms an image on a print medium by supplying a drive signal to a piezoelectric element of the ink jet head to eject ink from a nozzle. The drive signal is generated by a driving circuit based on a drive waveform. The drive waveform is generated based on setting value data.

In the related art, optimal drive waveforms for the inkjet head and a particular ink may be obtained by measuring a flying state of ink droplets or a print quality while varying parameters of the drive waveform.

DISCLOSURE OF THE INVENTION

To this end, a printing system, a setting value data providing system and a method for printing medium according to appended claims are provided.

BRIEF DESCRIPTION OF THE DRAWINGS

FIG. 1 is a block diagram of a liquid droplet ejection device that operates using setting value data provided from a setting value data providing system according to an embodiment.
FIG. 2 is a block diagram of a head controller.
FIG. 3 is a block diagram of an inkjet head.
FIG. 4 is a flowchart of a procedure for selecting a drive condition of an inkjet head using a related-art method.
FIG. 5 is a block diagram s of a setting value data providing system according to an embodiment.
FIG. 6 is a schematic diagram of an authentication server.
FIG. 7 is a schematic diagram of an application server and a web API server.
FIG. 8 is a schematic diagram of a database server.
FIG. 9 is a flowchart of processing of a setting value data calculation program executed by a setting value data providing system.
FIG. 10 is a diagram of a user input (UI) screen for inputting of parameters.
FIG. 11 is a diagram showing a correlation between ink specific gravity and pressure propagation time.
FIG. 12 is a schematic block diagram showing aspects of process from input of parameters to output of a setting value data.
FIG. 13 is a flowchart a process from input of parameters to output of a setting value data.
FIG. 14 is a block diagram showing aspects of another example of a head controller.
FIG. 15 is a schematic block diagram showing aspects of another example of an inkjet head.

DETAILED DESCRIPTION

In methods in the related art, time and effort is required to perform measurement evaluations of each specific ink and ink jet head combination to be utilized in a printer or the like. Because the ink and a supply system of the ink must be discarded after each time a measurement evaluation is performed such systems are not environmentally friendly.

An object of an exemplary embodiment described herein is to provide a setting value data providing system that provides setting value data for generating a suitable drive waveform without requiring additional, actual measurements or testing when a different ink jet head or ink is to be used.

According to an embodiment, a setting value data providing system includes a web server configured to receive, from a client device, drive condition parameters of an ink jet head and physical property parameters of an ink to be used by the ink jet head. The system further includes a setting value data calculation unit configured to estimate a suitable drive waveform for the ink jet head using a drive waveform estimation algorithm and the drive condition parameters and the physical property parameters of the ink and then calculate setting value data for generating the suitable drive waveform for the inkjet head. The web server is further configured to output the calculated setting value data to the client device.

Hereinafter, a setting value data providing system according to an example embodiment will be described with reference to the drawings. The setting value data providing system receives a drive condition for an ink jet head and a physical property value (characteristic parameter) of ink from a client via a cloud server or the like, estimates a suitable drive waveform for the ink jet head from the received drive condition and physical property value, calculates setting value data for generating the estimated suitable drive waveform, and provides the calculated setting value data to the client via the cloud. Prior to further description of a setting value data providing system, a liquid ejection device that operates using the setting value data provided from the setting value data providing system will be described.

Liquid Ejection Device

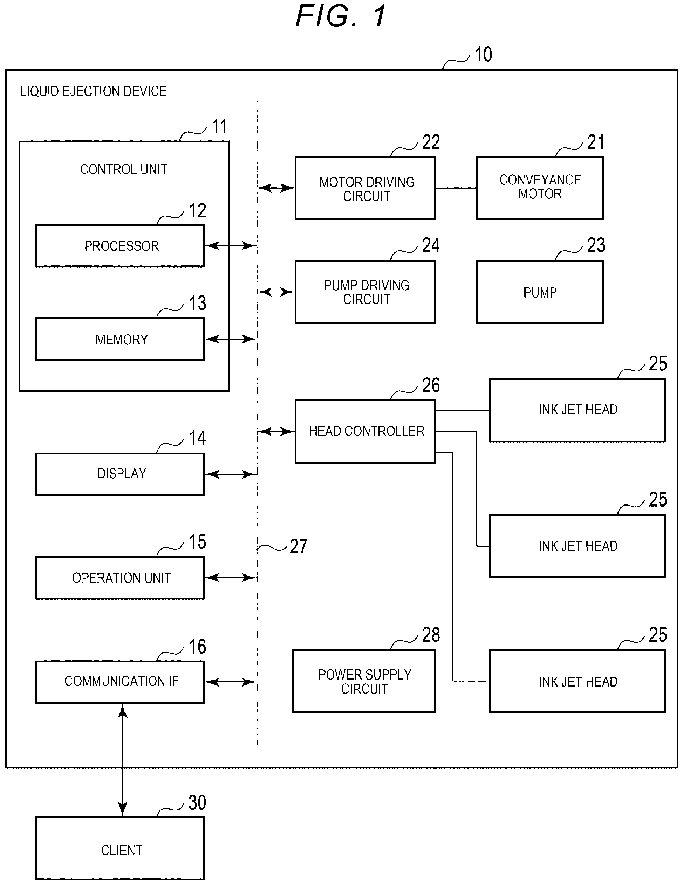

FIG. 1 is a block diagram showing a configuration example of a liquid ejection device 10 that can operate using the setting value data provided from the setting value data providing system according to an embodiment. The liquid ejection device 10 is, for example, an ink jet recording device (an inkjet printer). The liquid ejection device 10 is not limited to this and may be another device type such as a copying machine (an inkjet copier).

The liquid ejection device 10 performs various types of processing for image formation while conveying, a print medium (e.g., a sheet of paper) serving as a recording medium.

The liquid ejection device 10 includes a control unit 11, a display 14, an operation unit 15, a communication interface (IF) 16, a conveyance motor 21, a motor driving circuit 22, a pump 23, a pump driving circuit 24, a plurality of ink jet heads 25, a head controller 26, a system bus 27, and a power supply circuit 28. The liquid ejection device 10 also includes a conveyance mechanism, a paper feed cassette, a paper discharge tray, and the like.

The power supply circuit 28 converts AC power supplied from a commercial power supply into DC power. The power supply circuit 28 supplies the DC power to each of the components in the liquid ejection device 10.

The system bus 27 is a communication path between the control unit 11, the display 14, the operation unit 15, the communication interface 16, the motor driving circuit 22, the pump driving circuit 24, and the head controller 26. The control unit 11, the display 14, the operation unit 15, the communication interface 16, the motor driving circuit 22, the pump driving circuit 24, and the head controller 26 can transmit and receive information, data, addresses, control signals, instructions, responses, and the like to and from each other via the system bus 27.

The control unit 11 performs various types of control for the liquid ejection device 10. The control unit 11 includes a processor 12 and a memory 13. The processor 12 is an arithmetic element that executes arithmetic processing. The processor 12 performs various types of processing based on, for example, a program stored in the memory 13 and data used in the program. The memory 13 stores the program, the data used in the program, and the like in a rewritable manner.

The display 14 is, for example, a display device such as a liquid crystal display. The display 14 displays an image in response to a video signal input from the processor 12, a graphic controller or the like for performing image processing.

The operation unit 15 includes an input operation component that generates an input operation signal based on an input operation of a user. Examples of the operation component can be or include a touch sensor, a numeric keypad, a power key, a paper feed key, various function keys, or a keyboard. The touch sensor is, for example, a resistance film type touch sensor or a static capacitance type touch sensor. The touch sensor acquires information indicating a designated ("touched") position in a certain region. The touch sensor may be used as an integrated touch panel disposed on an upper surface of the display 14. In this case, the touch sensor generates a signal corresponding to a position touched on a screen displayed on the display 14.

The communication interface 16 is an interface that connects to an external device. The communication interface 16 is used for communication with, for example, a client 30 that transmits register values for print data and the setting value data to the liquid ejection device 10. The communication interface 16 communicates with the client 30 via a wired or wireless network, for example, a local area network (LAN). The client 30 can be a control server, a PC, or the like that controls the liquid ejection device 10.

The conveyance motor 21 rotates to operate a conveyance component of the conveyance mechanism for conveying the print medium. The conveyance component can be a conveyance belt that conveys the print medium, a plurality of rollers (e.g., driving rollers and driven rollers) by which the conveyance belt is supported, a guide plate, and the like. The conveyance motor 21 rotates a driving roller to move the conveyance belt. The print medium moves along a conveyance path defined by the guide plate(s) disposed in the vicinity of the conveyance belt.

The motor driving circuit 22 is a circuit that drives the conveyance motor 21. The motor driving circuit 22 drives the conveyance motor 21 in response to a conveyance control signal input from the control unit 11. The motor driving circuit 22, the conveyance motor 21, and the conveyance mechanism convey the print medium picked up from the paper feed cassette to the paper discharge tray via the plurality of ink jet heads 25. The paper feed cassette accommodates a plurality of print media. The paper discharge tray is a tray that accommodates the print medium discharged from the liquid ejection device 10.

The pump 23 supplies the ink from an ink tank to a pressure chamber of the ink jet head 25 through an ink supply path. The pump 23 is disposed on the ink supply path consisting of a tube that connects the ink tank and the pressure chamber of the ink jet head 25.

The pump driving circuit 24 drives the pump 23 in response to an ink supply control signal from the processor 12.

The pump 23 supplies the ink in the ink tank to the pressure chamber of the inkjet head 25.

The inkjet head 25 is an image forming unit that ejects ink onto the print medium to form an image. The inkjet head 25 includes actuators that are driving elements that eject the ink from a nozzle. The driving elements may be piezoelectric elements or the like. The ink jet head 25 can also include a sensor for detecting an ink temperature, a driving circuit for driving the actuators, and the like. The ink jet head 25 forms an image by ejecting ink onto a print medium that is conveyed by the conveyance mechanism. Image formation (inkjet head 25 operation) is based on a driving power supply and a control signal supplied from the head controller 26. Separate ink jet heads 25 are provided for each color of ink available for image formation. For example, the color of available inks are cyan, magenta, yellow, and black.

The liquid ejection device 10 receives the register values for the print data and the setting value data from the client 30 via the communication interface 16, and stores the register values in the memory 13. When setting (configuring) the ink jet head 25, the processor 12 reads the register values for the print data and the register values for setting value data from the memory 13, and transmits these register values to the head controller 26.

The head controller 26 is a circuit that controls the plurality of ink jet heads 25 based on the register values and the setting value data. The head controller 26 supplies different power supply voltages to the inkjet head 25 based on the register values for the setting value data. In addition, the head controller 26 generates a control signal based on the print data. The head controller 26 supplies the power supply voltage and the control signal to the ink jet head 25 to selectively operate the actuators in the ink jet head 25 to eject ink from nozzles of the inkjet head 25 to form an image on the print medium.

Head Controller

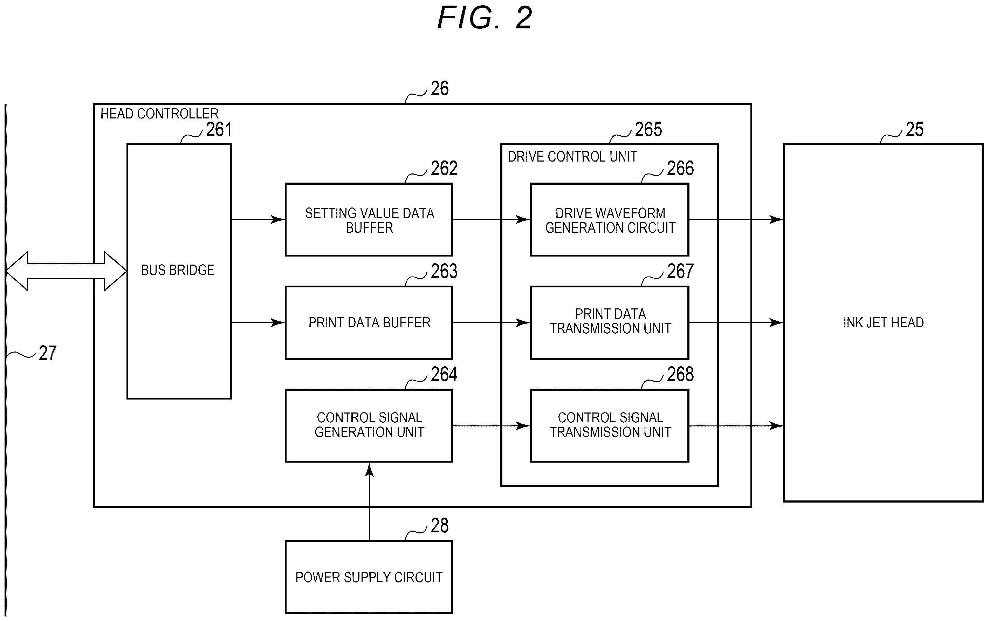

Next, a configuration example of the head controller 26 of the liquid ejection device 10 will be described with reference to FIG. 2. FIG. 2 is a block diagram showing the configuration example of the head controller 26.

The head controller 26 includes a bus bridge 261, a setting value data buffer 262, a print data buffer 263, a control signal generation unit 264, and a drive control unit 265. The drive control unit 265 includes a drive waveform generation circuit 266, a print data transmission unit 267, and a control signal transmission unit 268.

The setting value data is input to the setting value data buffer 262 via the bus bridge 261 from the system bus 27. The setting value data is waveform digital data for the drive waveform. The setting value data buffer 262 temporarily stores the setting value data, appropriately performs processing required for the setting value data, and outputs the setting value data to the drive waveform generation circuit 266 of the drive control unit 265. The drive waveform generation circuit 266 generates a digital drive waveform in accordance with the setting value data and outputs the drive waveform to the inkjet head 25.

The print data is input to the print data buffer 263 via the bus bridge 261 from the system bus 27. The print data buffer 263 temporarily stores the print data, appropriately performs required processing, and outputs the print data to the print data transmission unit 267 of the drive control unit 265. The print data transmission unit 267 transmits the print data to the inkjet head 25.

The control signal generation unit 264 generates the control signal for the inkjet head 25 and outputs the control signal to the control signal transmission unit 268 of the drive control unit 265. The control signal includes a clock signal or the like for establishing an operation timing. The control signal generation unit 264 also generates the power supply voltage to be supplied to the ink jet head 25 and outputs the power supply voltage to the control signal transmission unit 268. The control signal transmission unit 268 transmits the control signal and the power supply voltage to the ink jet head 25.

Ink Jet Head

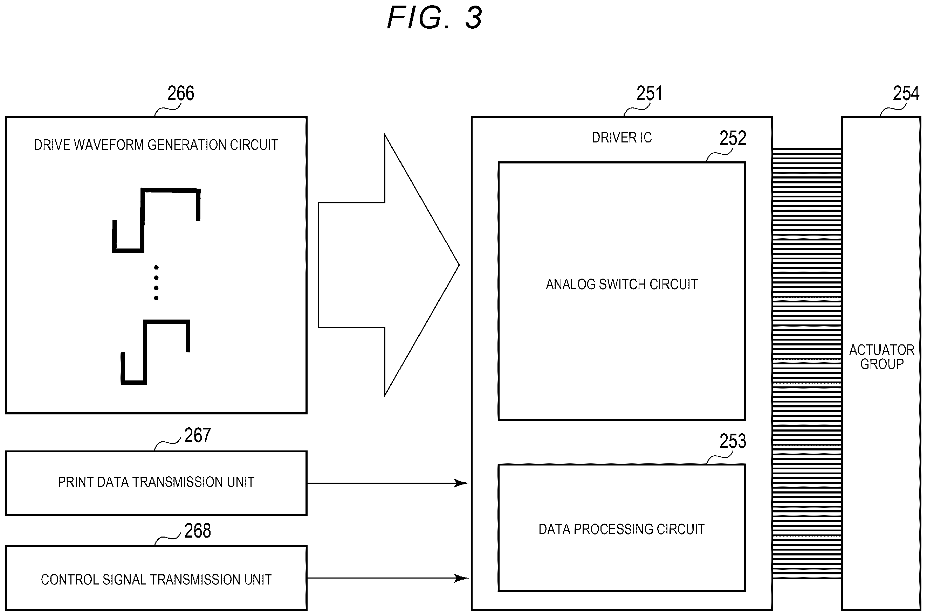

A configuration example of the ink jet head 25 of the liquid ejection device 10 will be described with reference to FIG. 3. FIG. 3 is a block diagram showing the configuration example of the inkjet head 25.

The ink jet head 25 includes a driver IC 251 and an actuator group 254. The actuator group 254 includes a plurality of actuators. Each actuator is a driving element that functions to expand and contract a pressure chamber to eject ink (liquid) droplets from a nozzle connected to the pressure chamber. For example, each actuator is a piezoelectric driving element made of lead zirconate titanate (PZT).

The driver IC 251 is a driving circuit of the inkjet head 25. Specifically, the driver IC 251 is a driving circuit that drives the actuator group 254. The driver IC 251 includes an analog switch circuit 252 and a data processing circuit 253. The analog switch circuit 252 receives a digital drive waveform from the drive waveform generation circuit 266. The data processing circuit 253 receives the print data from the print data transmission unit 267 The data processing circuit 253 also receives the control signal and the power supply voltage from the control signal transmission unit 268. The data processing circuit 253 supplies the power supply voltage to the analog switch circuit 252. The data processing circuit 253 generates a control signal for the analog switch circuit 252 based on the print data and the control signal, and outputs the control signal to the analog switch circuit 252. Under the control of the data processing circuit 253, the analog switch circuit 252 generates an analog drive signal from the digital drive waveform input from the drive waveform generation circuit 266, and outputs the analog drive signal to the actuator group 254. Specifically, the analog switch circuit 252 includes a plurality of switch elements having different power supply voltage levels, and generates an analog drive signal by selectively turning on and off these different switch elements.

Each actuator of the actuator group 254 operates in response to the drive signal from the driver IC 251 to expand and contract a pressure chamber to eject ink liquid droplets from a nozzle.

Selection of Setting Value Data by Related-Art Method

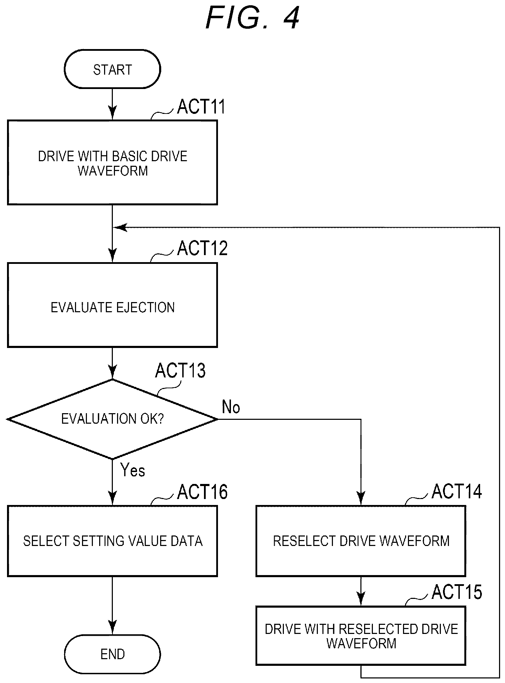

Next, a procedure of selecting the setting value data of an inkjet head 25 by a related-art method will be described with reference to FIG. 4. FIG. 4 is a flowchart showing the procedure of selecting the setting value data of the inkjet head 25 by the related-art method.

In ACT11, the inkjet head 25 is driven with a basic drive waveform to eject the ink to form an image on a print medium.

In ACT12, this ejection of the ink is evaluated. The ejection of the ink can be evaluated based on, for example, resolution, color reproduction, image clarity, and dot position accuracy by reviewing the printed image formed on the print medium. The ejection may also be evaluated based on a size, a speed, a shape, and the like of the ink droplets ejected.

In ACT13, the evaluation result is confirmed. For example, the evaluation result is checked by quantifying the evaluated parameters and comparing the numerical values for the parameters to a threshold value. For example, if a numerical value for each evaluated parameter is better than the corresponding threshold value for the parameter, the evaluation result is considered OK, and if the numerical value of a parameter is not better than the corresponding threshold value, the evaluation result is considered NG (no good).

If the evaluation result is NG in ACT13 (No in ACT13), another drive waveform is selected in ACT14 (a reselection of the drive waveform occurs). Subsequently, in ACT15, the ink jet head 25 is driven by the reselected drive waveform to eject the ink for printing an image on the print medium. Then, the evaluation operations of ACT12 and ACT13 are performed again.

That is, the operations of ACT14, ACT15, and ACT12 are repeated until an obtained evaluation result is OK in ACT13.

If the evaluation result is OK in ACT 13 (Yes in ACT13), the drive waveform used to produce the acceptable evaluation result is certified as an optimal drive waveform in ACT16, and the setting value data for generating this drive waveform is selected (designated) as optimal setting value data.

Setting Value Data Providing System

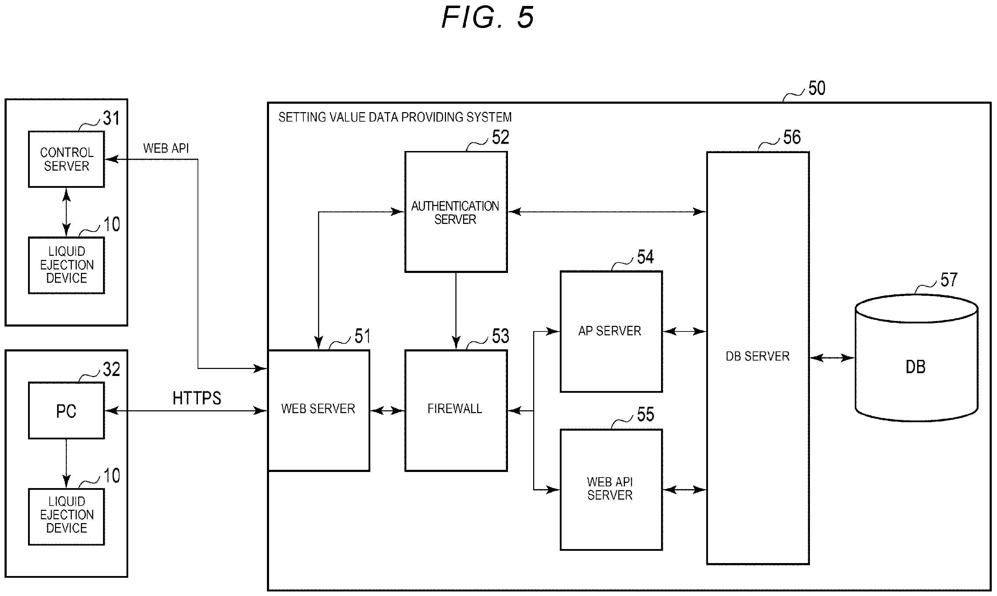

Next, a configuration example of a setting value data providing system 50 according to an embodiment will be described with reference to FIG. 5. FIG. 5 is a block diagram of the setting value data providing system 50. The setting value data providing system 50 can incorporate a server apparatus or a cloud-based server or the like. The setting value data providing system 50 can also be called a setting value data providing server.

The setting value data providing system 50 includes a web server 51, an authentication server 52, a firewall 53, an application server 54, a web API server 55, a database server 56, and a database 57. In the drawing, the application server is abbreviated as "AP server", and the database is abbreviated as "DB".

The web server 51 is a first entrance (portal) for the client to access the setting value data providing system 50, and cooperates with each other server (authentication server 52, application server 54, web API server 55, and database server 56) in the system and the database 57 to return a response to a client request to the client.

In an example, the client is a control server 31 that controls a liquid ejection device 10. In this case, the control server 31 transmits a client request to the web server 51 and then receives the response from the web server 51 by an API that is published as a web API.

In another example, the client can be a PC 32 that controls a liquid ejection device 10. The PC 32 may be a user PC or an administrator PC. In this case, the user or an administrator who operates the PC 32 transmits the client request to the web server 51 via, for example, HTTPS communication through a user interface screen (UI screen) of a web application (for example, a web browser) displayed on the PC 32, and then receives a response from the web server 51. The UI screen of the web application may be created using, for example, HTML, CSS, JavaScript, or the like.

The database 57 stores various types of data. The database server 56 manages the database 57. The database server 56 stores appropriate data in the database 57 in response to requests from the authentication server 52, the application server 54, and the web API server 55, and reads the appropriate data from the database 57 in response to requests. The database server 56 provides data from the database 57 to the authentication server 52, the application server 54, and the web API server 55.

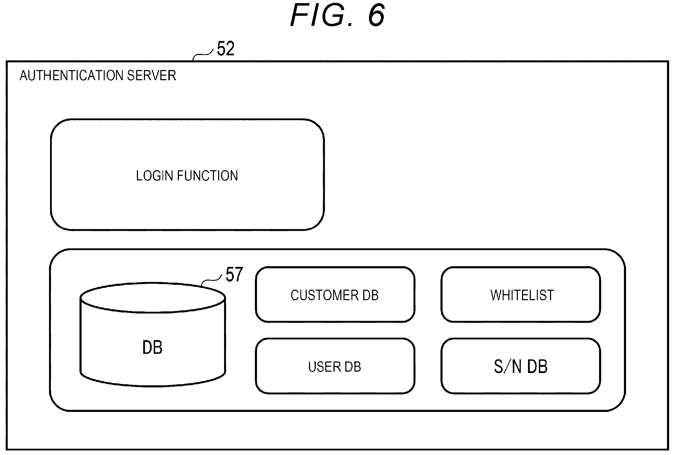

FIG. 6 is a schematic block diagram of the authentication server 52. The authentication server 52 provides a login function. The authentication server 52 includes a customer database, a user database, a whitelist, and a serial number (S/N) database as dedicated databases in the database 57.

The authentication server 52 receives client login information from the web server 51, and permits login for a permitted client by cooperation between the login function and the whitelist that holds information about the permitted client(s). In addition, the authentication server 52 requests input of required information from a new client by using the login function, identifies an access source domain, registers the required information and the access source domain in the whitelist, and then permits the login. The authentication server 52 outputs the authentication result to the firewall 53.

The authentication server 52 permits an administrator to perform an operation by which administrator authority is granted, such as registration of a user in the user database or access to each database. The authentication server 52 performs collation between the customer database or the serial number database in response to the input of a serial number of an inkjet head after the login.

The firewall 53 protects the application server 54 and the web API server 55 from unauthorized access or the like. The firewall 53 permits the permitted client(s) to access the application server 54 and the web API server 55 based on the authentication result received from the authentication server 52.

The application server 54 provides an execution environment for a web application. The web API server 55 provides the API.

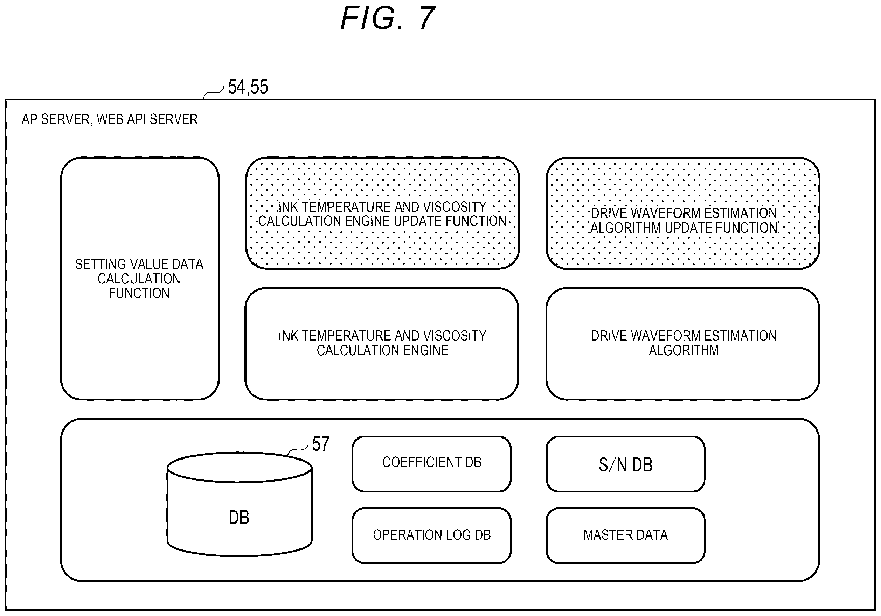

FIG. 7 is a schematic block diagram of the application server 54 and the web API server 55. The application server 54 and the web API server 55 have a setting value data calculation function, an ink temperature and viscosity calculation engine, and a drive waveform estimation algorithm. The application server 54 and the web API server 55 have a coefficient database, a serial number database, an operation log database, and master data as dedicated databases in the database 57. The application server 54 and the web API server 55 provide the administrator an update function for the ink temperature and viscosity calculation engine and an update function for the drive waveform estimation algorithm.

The application server 54 and the web API server 55 receive parameters including a drive condition of the ink jet head 25 and a physical property value of the ink being used from a client who logs in and has been authenticated. The setting value data calculation function estimates the optimal drive waveform for an ink jet head 25 with the drive waveform estimation algorithm based on data analysis by using the ink temperature and viscosity calculation engine, the dedicated database, and the like from the parameters corresponding to the drive condition(s) and the ink physical property value(s). The drive waveform estimation algorithm is an estimation algorithm using a type of the ink, a specific gravity of the ink, and a type of the ink jet head as input variables. The setting value data calculation function calculates the setting value data for generating the estimated optimal drive waveform. Furthermore, the setting value data calculation function can correct the setting value data based on the viscosity or the temperature of the ink. Examples of ink types include an ultraviolet curable ink, an oil-based ink, a solvent ink, a ceramic ink, and an aqueous ink.

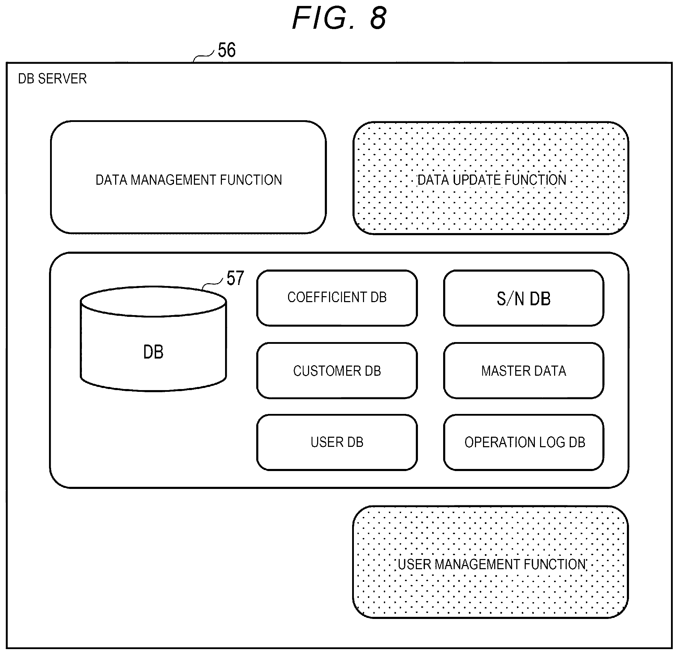

FIG. 8 shows a schematic block diagram of the database server 56. The database server 56 has a data management function, a data update function, and a user management function. The database server 56 has a coefficient database, a serial number database, a customer database, master data, a user database, an operation log database, and the like in the database 57. The database server 56 provides the data update function and the user management function to the administrator.

In the setting value data providing system 50 described above, the web server 51 functions as an input unit that receives parameters from the client via the cloud or web. In addition, the application server 54 and the web API server 55 function as a setting value data calculation unit that calculates the setting value data for generating the optimal drive waveform for an inkjet head 25. The web server 51 also functions as an output unit that provides the setting value data to the client via the cloud or web.

The client transmits the parameters including the drive condition(s) of the ink jet head 25 of the liquid ejection device 10 and the physical property value(s) of the ink and a request for calculation processing of the setting value data for the optimal drive waveform to the setting value data providing system 50.

If the access attempt of the client is proper, the setting value data providing system 50 receives the parameters via the web server 51, calculates the setting value data for generating an optimal drive waveform for the ink jet head 25 in the application server 54 or the web API server 55, and transmits the calculated setting value data to the client via the web server 51.

For example, if the client is a control server 31 that controls a liquid ejection device 10, the web API server 55 receives the parameters including the drive conditions of the ink jet head 25 and the physical property value(s) of the ink, and outputs these parameters to the database server 56. The database server 56 stores these parameters in the database 57.

The web API server 55 calculates the setting value data for generating an optimal drive waveform for the ink jet head 25. The web API server 55 stores the setting value data in the database 57 via the database server 56. The web API server 55 transmits the setting value data to the control server 31 (client) via the firewall 53 and the web server 51.

The control server 31 transmits the received setting value data to the liquid ejection device 10. The liquid ejection device 10 receives the setting value data via the communication interface 16 and stores the setting value data in the memory 13. When setting (when configuring) the ink jet head 25, the processor 12 reads the setting value data from the memory 13 and transmits the setting value data to the head controller 26. The head controller 26 generates the drive waveform to be output to the inkjet head 25 based on the setting value data in the drive waveform generation circuit 266.

If the client is a PC 32 that controls a liquid ejection device 10, the application server 54 executes the same operation as in the web API server 55 described above. That is, the application server 54 receives the parameters including the drive condition(s) of the ink jet head 25 and the physical property value(s) of the ink, and stores these parameters in the database 57 via the database server 56.

The application server 54 calculates the setting value data for generating an optimal drive waveform for the ink jet head 25. The application server 54 stores the setting value data in the database 57 via the database server 56. The application server 54 transmits the setting value data to the PC 32 (client) via the firewall 53 and the web server 51.

The PC 32 transmits the received setting value data to the liquid ejection device 10 automatically or under a specific instruction from the user of the PC 32. The liquid ejection device 10 receives the setting value data via the communication interface 16 and stores the setting value data in the memory 13. When setting (when configuring) the ink jet head 25, the processor 12 reads the setting value data from the memory 13 and transmits the setting value data to the head controller 26. The head controller 26 generates the drive waveform to be output to the ink jet head 25 based on the setting value data in the drive waveform generation circuit 266.

Operation Example of Setting Value Data Providing System

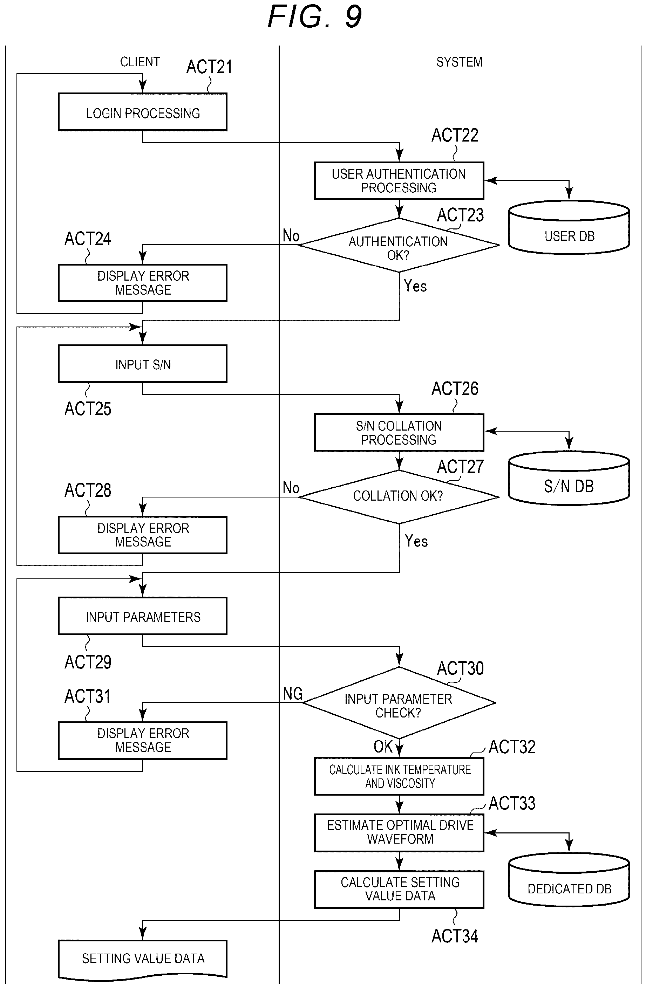

Next, an operation example of the setting value data providing system 50 will be described with reference to FIG. 9. FIG. 9 is a flowchart showing an operation example of the setting value data providing system 50. Here, for convenience, the client will be described as a PC 32. The flowchart of FIG. 9 shows processing of the client (PC 32 and user) on the left side and processing of the setting value data providing system 50 on the right side.

In ACT21, PC 32 displays a UI screen for login processing on a screen of the web application and prompts the user to perform the login processing.

After the user performs the login processing, the setting value data providing system 50 performs user authentication processing by making an inquiry to the user database by using the authentication server 52 in ACT22, and checks the authentication result in ACT23.

If the authentication result is NG (No in ACT23), the setting value data providing system 50 instructs the PC 32 to display an error message. The PC 32 displays the error message on the screen in ACT24 and waits for the user's confirmation. If the user confirms the error message, the PC 32 returns back to the processing of ACT21, and displays the UI screen for the login processing on the screen and prompts the user to perform the login processing again.

If the authentication result is OK (Yes in ACT23), the setting value data providing system 50 transmits a request to the PC 32 for the input of the serial number of the ink jet head 25.

The PC 32 then displays a UI screen for the input of the serial number and prompts the user to input the serial number in ACT25.

After the user inputs the serial number of the ink jet head 25, the setting value data providing system 50 performs serial number collation processing by making an inquiry to the serial number database by the authentication server 52 in ACT26, and checks the collation result in ACT27.

If the collation result is NG (No in ACT27), the setting value data providing system 50 instructs the PC 32 to display an error message. The PC 32 displays the error message on the screen in ACT28 and waits for the user's confirmation. If the user confirms the error message, the PC 32 returns back to the processing of ACT25, and displays the UI screen for the input of the serial number again and prompts the user to input the serial number.

If the collation result is OK (Yes in ACT27), the setting value data providing system 50 transmits a request to the PC 32 for the input of the parameters including the drive condition of the inkjet head 25 and the physical property value of the ink.

The PC 32 displays a UI screen for the input of the parameters on the screen in ACT29 and prompts the user to input the requested parameters.

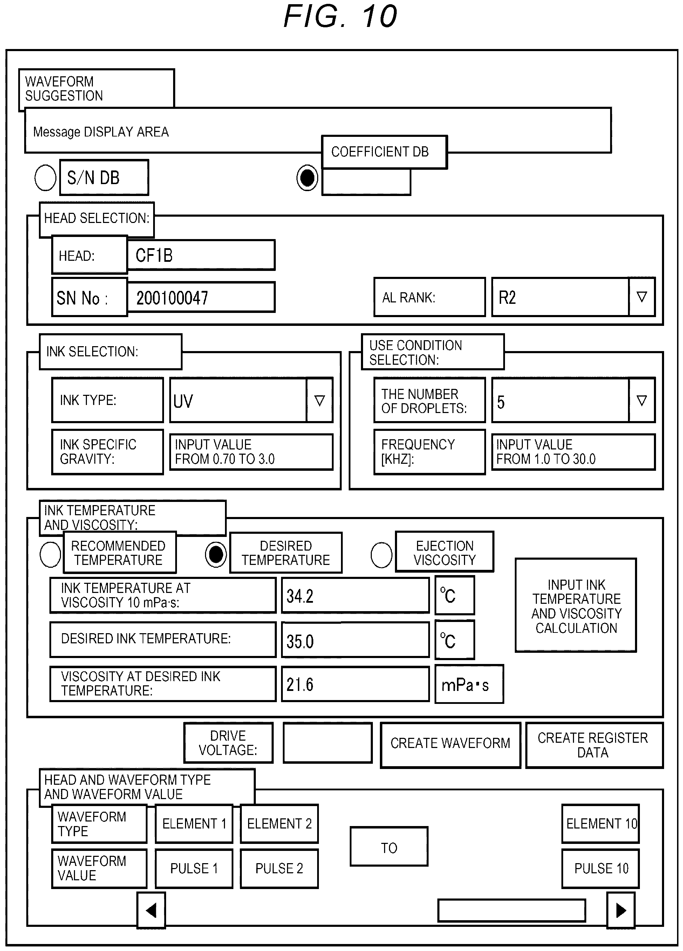

FIG. 10 shows an UI screen for the input of the parameters that can be displayed on the PC 32. The UI screen for the input of the parameters includes options of a serial number database or a coefficient database, a parameter input field for the ink jet head 25, a parameter input field for the ink, a parameter input field for a use condition, a parameter input field for the ink temperature and viscosity, a parameter input field for the drive voltage, a parameter input field for a waveform type and a waveform value.

The user inputs information about the ink type, the ink specific gravity, the ink temperature, and the ink viscosity as the physical property values of the ink on the UI screen shown in FIG. 10. In addition, as the drive conditions of the inkjet head 25, the user inputs information about a head type, a head characteristic value, a serial number, an acoustic length (AL) rank, a head drive voltage, the number of ejected droplets, and a frequency. There may also be values related to a print condition or a print quality to be input, and the physical property values and the drive conditions are not limited to the examples described above. In the present context, acoustic length (AL) is the time equal to have a half of a characteristic vibration period for the ink in the pressure chamber of the inkjet head 25, and is also referred to as a pressure propagation time. The AL will generally be different values depending on inkjet head design, size, and/or type. The AL value may be broadly ranked or categorized, and the AL rank can be assigned by head design, size, and/or type.

In the parameter input field of the ink temperature and viscosity, if the user selects a recommended temperature, a recommended value is automatically input, and the input by the user is not required. In addition, if the user intends to select a desired temperature or an ejection viscosity, the user clicks an icon for the input of the ink temperature and viscosity calculation to execute the ink temperature and viscosity calculation.

After the user inputs the parameters, the setting value data providing system 50 performs input parameter check processing in ACT30 by using the application server 54.

If the check result is NG (NG in ACT30), the setting value data providing system 50 instructs the PC 32 to display an error message. The PC 32 displays the error message on the screen in ACT31 and waits for the user's confirmation. If the user confirms the error message, the PC 32 returns back to the processing of ACT29, and displays the UI screen for the input of the parameters and prompts the user to input the parameters again.

If the check result is OK (if the check result is OK in ACT30), the setting value data providing system 50 performs ink temperature and viscosity calculation processing by using the application server 54 in ACT32. The temperature and viscosity calculation processing in ACT32 may be omitted if the user selects the recommended temperature option in the parameter input field of the ink temperature and viscosity of the UI screen for the input of the parameters shown in FIG. 10.

Next, in ACT33, the setting value data providing system 50 estimates the optimal drive waveform for the ejection of the ink using the parameters input in ACT29 by the application server 54 by using the drive waveform estimation algorithm and the dedicated database.

Subsequently, in ACT34, the setting value data providing system 50 calculates the setting value data for generating an optimal drive waveform for the ink jet head 25 by using the application server 54. After the setting value data is calculated, the setting value data providing system 50 outputs the setting value data to the PC 32 (the client). Correlation Expression between Ink Specific Gravity and Pressure Propagation Time

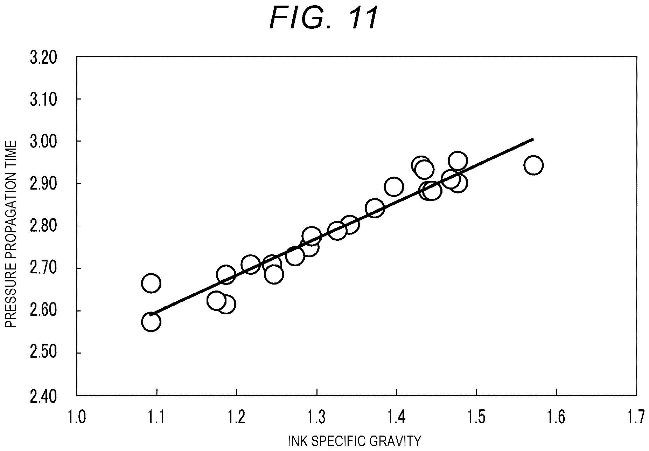

FIG. 11 is a diagram showing a correlation between ink specific gravity and pressure propagation time (AL). As can be seen from the drawing, there is a strong correlation between the ink specific gravity and the pressure propagation time for an ink jet head. In view of this correlation, a characteristic pressure propagation time of an ink jet head 25 can be derived by calculation using a head shipping test ink evaluation result. The head shipping test ink evaluation result performs AL measurement, drive voltage measurement, and print quality measurement of an ink jet head 25 by using a test ink before shipping of the inkjet head 25. Afte an AL value for an inkjet head 25 is obtained for a test ink (of known specific gravity), an ink-specific AL for a different ink can be obtained by estimation and calculation based on the test ink AL and the established correlation (see Fig. 11). The drive voltage for an ink can be obtained by estimation and calculation based on a drive voltage for the test ink.

Process from Input of Parameters to Output of Setting Value Data

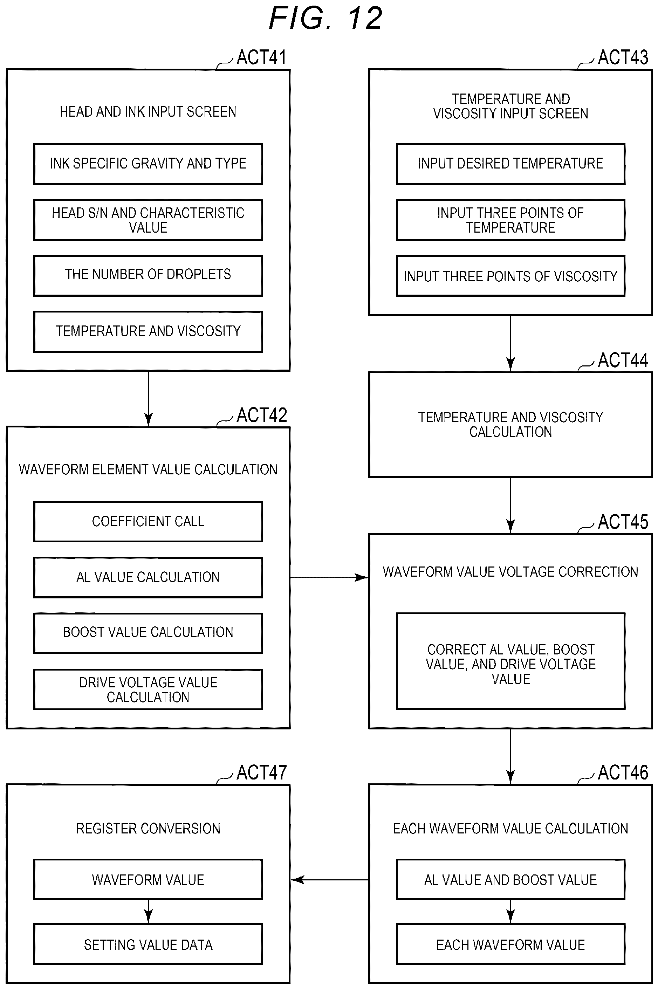

Next, the process from the input of the parameters to the output of the setting value data will be described with reference to FIG. 12. FIG. 12 is a functional block diagram showing aspects of the process from the input of the parameters to the output of the setting value data. Here, for convenience, the client will be described as the PC 32 and the user thereof.

In ACT41, parameters related to the physical properties of the ink (e.g., ink type, ink specific gravity, ink temperature, ink viscosity, and the like), parameters related to the drive conditions of the ink jet head 25 (e.g., head type, head characteristic value, serial number, AL rank, head drive voltage, the number of ejected droplets, frequency, and the like), and other parameters and the like are input via a head and ink input screen.

In ACT42, the waveform element value calculation is performed based on the parameters input via the head and ink input screen. The waveform element value calculation includes a coefficient call, AL value calculation, boost value calculation (ejection velocity amplification pulse calculation), drive waveform calculation, and the like. In the waveform element value calculation, the characteristic pressure propagation time for the ink jet head 25 is estimated and calculated from the ink type, the ink specific gravity, the drive conditions of the ink jet head 25, and the established relationship between ink specific gravity and pressure propagation time. Next, each waveform element value is estimated and calculated from a calculation expression derived from the data of the pressure propagation time and the ink evaluation result.

As an option, in ACT43, if a desired temperature (operating temperature) is input, three temperatures and viscosities can be input, and three viscosities on a temperature and viscosity input screen. Subsequently, in ACT44, the temperature and viscosity calculation is performed based on the input parameters.

In ACT45, the waveform value voltage correction is performed for the calculated waveform element values and the temperature and viscosity calculation results. In the waveform value voltage correction, the waveform element values and the drive waveform are corrected for the ink temperature and the ink viscosity conditions that will be used. That is, the waveform element value calculation is corrected by the temperature and viscosity calculation results. Specifically, the AL value, the boost value, and the drive waveform are adjusted by using a viscosity value calculated in the temperature and viscosity calculation.

In ACT46, separate waveform value calculations are performed. In each waveform value calculation, a waveform value is calculated based on the AL value calculation and the boost value calculation. Specifically, a calculation expression obtained by analyzing the data of the ink evaluation result with a method such as regression analysis or result classification is used to estimate and calculate pulse times of all the waveform elements.

In ACT47, the setting value data is acquired by performing register conversion on the waveform values. That is, the setting value data for generating the optimal drive waveform for the ink jet head 25 is acquired by converting a waveform value into register data. The setting value data is then output.

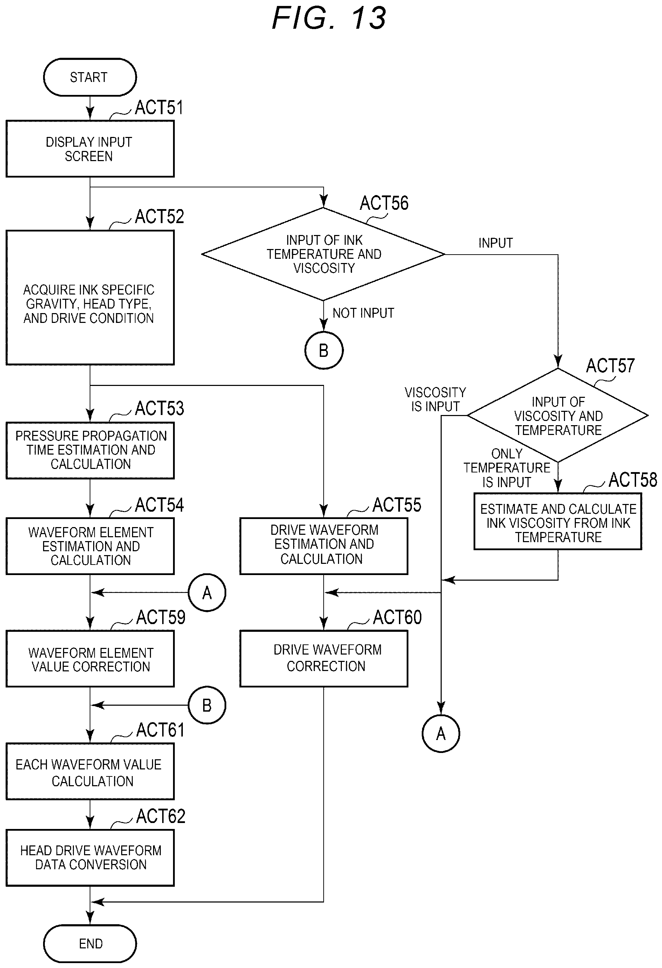

FIG. 13 is a flowchart of the process from the input of the parameters to the output of the setting value data. The process is mainly performed by the application server 54.

In ACT51, the application server 54 transmits a request to the PC 32 for displaying the UI screen for the input of the parameters shown in FIG. 10. The PC 32 that receives the request and displays the UI screen for the input of the parameters on the screen and prompts the user to input the parameters.

After the user inputs proper parameters, in ACT52, the application server 54 acquires the physical property values for the ink (ink type, ink specific gravity, ink temperature, ink viscosity, and the like), the drive conditions of the inkjet head 25 (head type, head characteristic value, serial number, AL rank, head drive voltage, the number of ejected droplets, frequency, and the like), and the like.

Next, in ACT53, the application server 54 performs pressure propagation time estimation and calculation. In the pressure propagation time estimation and calculation, the pressure propagation time is estimated and calculated from the ink type, the ink specific gravity, the drive condition of the ink jet head 25, and the relationship expression between the ink specific gravity and the pressure propagation time. The pressure propagation time is a characteristic value of an inkjet head 25.

Subsequently, in ACT54, the application server 54 performs the waveform element estimation and calculation. The application server 54 estimates and calculates each waveform element value based on a calculation expression derived from the characteristic pressure propagation time of the ink jet head 25 and the data of the ink evaluation result.

In ACT55, the application server 54 performs drive waveform estimation and calculation. In the drive waveform estimation and calculation, the drive waveform is estimated and calculated from the head characteristic value, the ink specific gravity, and the ink viscosity.

In ACT56, the application server 54 examines whether or not the ink temperature and the ink viscosity values were input. If the ink temperature and the ink viscosity values are input ("input" in ACT56), the process proceeds to ACT57. If the ink temperature and the ink viscosity values are not input ("not input" in ACT56), the process proceeds to ACT61.

In ACT57, the application server 54 examines the input of the ink temperature and the ink viscosity. If the ink viscosity is input (in ACT57), the process proceeds to ACT59 and ACT60. If the ink viscosity is not input (only the temperature was input in ACT57), the process proceeds to ACT58.

In ACT58, the application server 54 estimates and calculates the ink viscosity for the ink temperature. Then, the process proceeds to ACT59 and ACT60.

In ACT59, the application server 54 performs the waveform element value correction. In the waveform element value correction, the waveform element value is corrected for the ink temperature to be used (operating ink temperature), and the ink viscosity at the operating ink temperature. Then, the process proceeds to ACT61.

In ACT60, the application server 54 performs the drive waveform correction. In the drive waveform correction, the drive waveform is corrected (adjusted) based on the operating ink temperature and the ink viscosity at the operating ink temperature.

In ACT61, the application server 54 performs separate waveform value calculations. In each waveform value calculation, a calculation expression obtained by analyzing the data of the ink evaluation result with a method such as regression analysis or result classification is used to estimate and calculate pulse times of all the waveforms elements.

Next, in ACT62, the application server 54 performs head drive waveform data conversion. In the head drive waveform data conversion, the setting value data for generating the optimal drive waveform for the inkjet head 25 is acquired by converting the waveform values into register data. The setting value data is then output.

Operation Example

An operation example resulting in the outputting of the setting value data after input of parameters on the UI screen shown in FIG. 10 will be described.

A calculation expression for deriving a variable as the input value and the waveform value as the output is derived from the past actually measured data by statistical processing, and the output value is derived from a combination of the following plurality of first-order expressions with respect to the input value.

$$ax1 = \text{test ink minimum AL value} + an1 \quad (\text{Expression (1)})$$

$$ax2 = \text{test ink minimum AL value} + an2 \quad (\text{Expression (2)})$$

$$ay1 = c11 \times \text{ink specific gravity} + c12 \quad (\text{Expression (3)})$$

$$ay2 = c21 \times \text{ink specific gravity} + c22 \quad (\text{Expression (4)})$$

$$AL\_slope = (ay2 - ay1)/(ax2 - ax1) \quad (\text{Expression (5)})$$

$$AL\_intercept = ay1 - AL\_slope \times ax1 \quad (\text{Expression (6)})$$

$$\text{Test ink AL value} = \text{test ink minimum AL value} + \text{test ink AL rank value} \quad (\text{Expression (7)})$$

$$\text{Ink AL\_value} = AL\_slope \times \text{test ink AL value} + AL\_intercept \quad (\text{Expression (8)})$$

In Expression (1) and Expression (2), ax1 and ax2 are AL rank values of the test ink with respect to the head characteristic value, and an1 and an2 are AL rank values of the test ink representative of each inkjet head 25.

In Expression (3) and Expression (4), ay1 and ay2 are AL values for the ink specific gravity input with respect to ax1 and ax2, c11 to c22 are coefficients determined by the head type and the ink type, and are called when the head type and the ink type are input on the input screen of FIG. 10.

As an example of the values of the constant and the coefficient by the combination of the above-described head type and ink type, an1 = AL4, n2 = AL6, c11 = 0.491, c12 = 1.128, c21 = 0.495, and c22 = 1.167.

A relationship between the head characteristic value and the AL value for the test ink is obtained by Expression (1) and Expression (2), and a relationship between the head characteristic value and the AL value for the ink specific gravity is obtained by Expression (3) and Expression (4). Expression (5) and Expression (6) are slopes and intercepts of Expressions for obtaining the AL value using Expression (1) to Expression (4). The AL value of the test ink having the AL rank value required for the ink jet head 25 is derived by Expression (7), and the AL value of the specific gravity input using the AL_slope, the AL_intercept, and the AL value of the test ink obtained by Expressions (5) to (7) is derived by Expression (8).

With regard to the boost values, when the boost values for each head characteristic value are by1 and by2 by using the coefficients c13 to c24, which are determined from the head type and the ink type,

$$by1 = c13 \times \text{ink specific gravity} + c14 \quad (\text{Expression (9)})$$

$$by2 = c23 \times \text{ink specific gravity} + c24 \quad (\text{Expression (10)})$$

are obtained, and the AL values of Expression (1) and (2) can be calculated in the same manner by setting the AL values of Expression (1) and (2) as the x-axis and by setting by1 and by2 as the y-axis.

In the correction by the temperature and viscosity, if the viscosity value is input, then Ink voltage = test ink voltage + voltage addition variable + voltage correction coefficient_1 × (ink viscosity - recommended value of viscosity) is obtained. In the above expression, the voltage addition variable is a variable determined by the head type, the head characteristic value, and the ink type, and the voltage correction coefficient_1 is a coefficient for correcting the voltage value according to the value of the viscosity.

If the viscosity is not input but the temperature is input, Ink voltage = test ink voltage + voltage addition variable + voltage correction coefficient_2 × (ink temperature in pressure chamber - recommended temperature of ink) is obtained. In the expression, the voltage correction coefficient_2 is a coefficient for correcting the voltage value in accordance with the value of the temperature.

If the temperature and the viscosity are not input, no correction is performed.

As an example of a separate waveform value calculation, a calculation is performed in which each waveform value is allocated as follows: Drive pulse_1 = boost value, Drive pulse_2 = AL value, Drive pulse_3 = 2 × AL value, Drive pulse_4 = 0.5 × boost value - 0.4 × AL value + 1.8, and Drive waveform cycle time = 5 × AL value.

The setting value data thus acquired is output by converting the waveform into the register data of the digital data in response to the voltage pulse and each pulse time based on the head type and the waveform value thereof.

Other Head Controller and Ink Jet Head Configurations

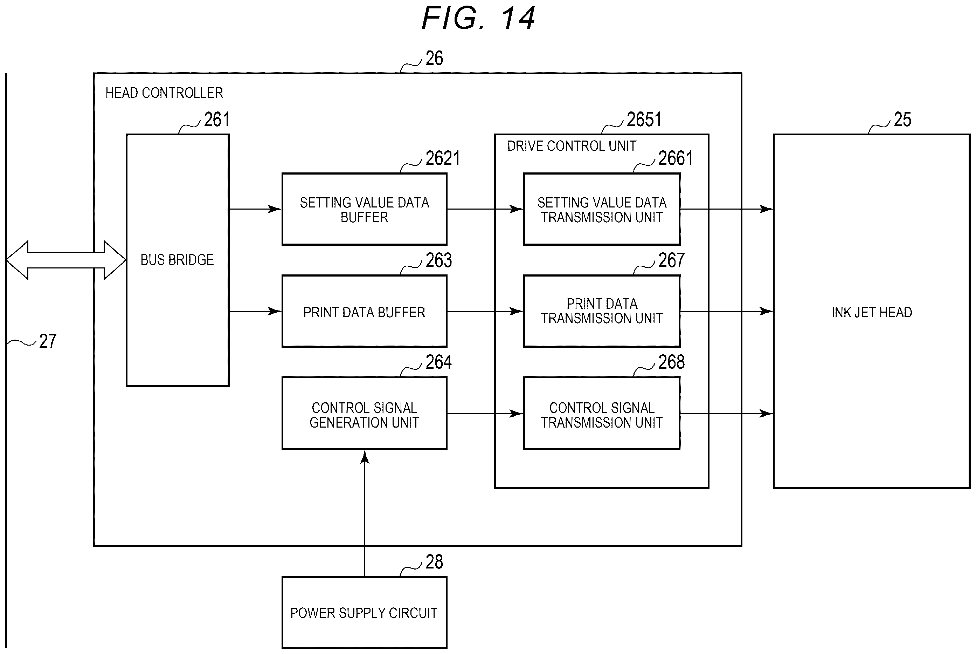

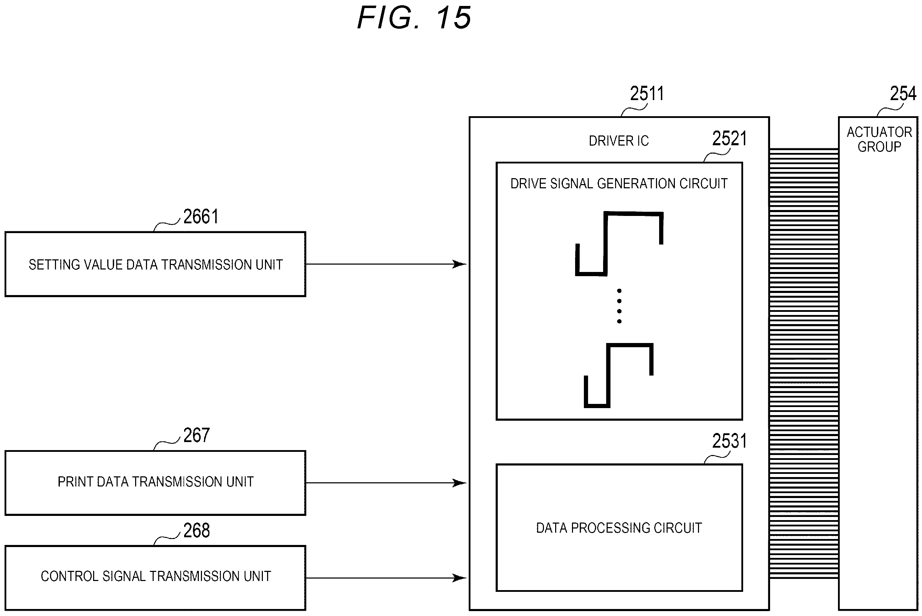

Other examples of a head controller 26 and an inkjet head 25 of an liquid ejection device 10 will be described with reference to FIG. 14 and FIG. 15. FIG. 14 is a block diagram showing another configuration of a head controller 26 of a liquid ejection device 10. FIG. 15 is a block diagram showing another configuration of an inkjet head 25 of a liquid ejection device 10. In FIGS. 14 and 15, the components denoted by the same reference numerals as in FIGS. 2 and 3 are substantially the same components, and detailed description thereof may be omitted.

Head Controller

The head controller 26 in FIG. 14 includes a bus bridge 261, a setting value data buffer 2621, a print data buffer 263, a control signal generation unit 264, and a drive control unit 2651. The drive control unit 2651 includes a setting value data transmission unit 2661, a print data transmission unit 267, and a control signal transmission unit 268.

The setting value data is input to the setting value data buffer 2621 via the bus bridge 261 from the system bus 27. The setting value data buffer 2621 temporarily stores the setting value data, appropriately performs processing required for the setting value data, and outputs the setting value data to the setting value data transmission unit 2661 of the drive control unit 2651. The setting value data transmission unit 2661 transmits the setting value data to the ink jet head 25.

Ink Jet Head

The ink jet head 25 of FIG. 15 includes a driver IC 2511 and an actuator group 254. The actuator group 254 includes a plurality of actuators. Each actuator is a driving element for expanding and contracting a pressure chamber for ejecting ink (liquid) droplets from a nozzle connected to the pressure chamber.

The driver IC 2511 is a driving circuit of the inkjet head 25. Specifically, the driver IC 2511 is a driving circuit that drives the actuator group 254. The driver IC 2511 includes a drive signal generation circuit 2521 and a data processing circuit 2531. The drive signal generation circuit 2521 receives the setting value data from the setting value data transmission unit 2661. The data processing circuit 2531 receives the print data from the print data transmission unit 267, and receives the control signal and the power supply voltage from the control signal transmission unit 268. The data processing circuit 2531 supplies the power supply voltage to the drive signal generation circuit 2521. The data processing circuit 2531 generates a control signal of the drive signal generation circuit 2521 based on the print data and the control signal, and outputs the control signal to the drive signal generation circuit 2521. Under the control of the data processing circuit 2531, the drive signal generation circuit 2521 generates an analog drive signal from the setting value data input from the setting value data transmission unit 2661 and outputs the drive signal to the actuator group 254. That is, the drive signal generation circuit 2521 integrates the functions of the drive waveform generation circuit 266 and the analog switch circuit 252.

Each actuator of the actuator group 254 operates in response to the drive signal from the driver IC 2511 to expand and contract a pressure chamber that contains ink and to eject the ink from a nozzle.

Effect

The setting value data providing system according to the embodiment receives information from a client via the cloud. In general, parameter information related to drive conditions of an ink jet head 25 and an ink type are used to calculate setting value data for generating a suitable drive waveform for the ink jet head 25. The calculated setting value data is then sent or provided to the client via the cloud. Therefore, the client can acquire setting value data for generating a suitable drive waveform without requiring actual measurements or testing of the ink jet head 25 in combination with a specific ink to be used. As a result, the number of man-hours required ejection evaluation and/or evaluation costs can be reduced. In the setting value data providing system according to an embodiment, since it is not required to perform the ejection evaluation multiple times to provide an evaluation result (such as in the process of FIG. 4), there is less waste of ink and the ink supply systems, and thus this system is environmentally friendly.

**EP 4 530 074 A1**

Others

A program executed by the setting value data providing system according to an embodiment may be stored in an electronic device or separately transferred from an electronic device. In the latter case, the program may be transferred via a network or in a storage medium. The storage medium can be a non-transitory tangible medium that is a computer-readable medium of any format, such as a CD-ROM and a memory card.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

**Claims**

1. A setting value data providing system (50), comprising:

   a web server (51)configured to receive, from a client device, drive condition parameters of an ink jet head and physical property parameters of an ink to be used by the ink jet head; and
   a setting value data calculation unit configured to estimate a suitable drive waveform for the ink jet head using a drive waveform estimation algorithm and the drive condition parameters and the physical property parameters of the ink and then calculate setting value data for generating the suitable drive waveform for the ink jet head, wherein
   the web server is further configured to output the calculated setting value data to the client device.

2. The setting value data providing system according to claim 1, wherein the setting value data calculation unit comprises a web API server (55).

3. The setting value data providing system according to claim 1 or 2, wherein the setting value data calculation unit comprises an application server.

4. The setting value data providing system according to any one of claims 1 to 3, wherein the setting value data calculation unit comprises an application server (54).

5. The setting value data providing system according to any one of claims 1 to 4, wherein the drive waveform estimation algorithm uses a type of the ink, a specific gravity of the ink, and a type of the inkjet head as input variables.

6. The setting value data providing system according to any one of claims 1 to 5, wherein the web server provides the client device with a user interface screen via which a user can input the type of the ink, the specific gravity of the ink, and the type of the inkjet head.

7. The setting value data providing system according to claim 6, wherein the user interface screen further permits the user to input of a temperature of the ink, a viscosity of the ink, a serial number of the inkjet head, a characteristic value of the ink jet head, and an ejection gradation number.

8. The setting value data providing system according to any one of claims 1 to 7, wherein the setting value data calculation unit is configured to adjust the setting value data based on a viscosity of the ink.

9. The setting value data providing system according to any one of claims 1 to 8, wherein the setting value data calculation unit is configured to adjust the setting value data based on an intended operating temperature of the ink.

10. A printing system, comprising:

    a ink jet printer configured to print images with ink;
    an inkjet head in inkjet printer configured to eject the ink to print the images;
    a client device connected to the inkjet printer; and
    a setting value data providing system according to any one of claims 1 to 9.

11. A method for printing medium using an inkjet head provided with a piezoelectric and a plurality of nozzles through which ink is ejected upon applying a drive signal to the piezoelectric element, comprising :

   providing setting value data by :

   receiving from a client device, drive condition parameters of an ink jet head and physical property parameters of an ink to be used by the ink jet head;
   estimating a suitable drive waveform for the inkjet head using a drive waveform estimation algorithm and the drive condition parameters and the physical property parameters of the ink and calculating setting value data for generating the suitable drive waveform for the ink jet head; and
   outputting the calculated setting value data to the client device;

   generating a drive waveform based on the setting value data,
   generating a drive signal using the driving circuit based on the drive waveform; and
   applying a drive signal to the piezoelectric element to eject ink from the plurality of nozzles.

12. The method according to claim 11, wherein the drive waveform estimation algorithm uses a type of the ink, a specific gravity of the ink, and a type of the ink jet head as input variables.

13. The method according to claim 11 or 12, further comprising adjusting the setting value data based on a viscosity of the ink.

14. The method according to any one of claims 11 to 13 further comprising adjusting the setting value data based on an intended operating temperature of the ink.

# FIG. 1

LIQUID EJECTION DEVICE 10

CONTROL UNIT 11

PROCESSOR 12

MEMORY 13

MOTOR DRIVING CIRCUIT 22

CONVEYANCE MOTOR 21

PUMP DRIVING CIRCUIT 24

PUMP 23

HEAD CONTROLLER 26

INK JET HEAD 25

DISPLAY 14

INK JET HEAD 25

OPERATION UNIT 15

27

COMMUNICATION IF 16

POWER SUPPLY CIRCUIT 28

INK JET HEAD 25

CLIENT 30

## FIG. 2

# FIG. 3

# FIG. 4

START

ACT11
DRIVE WITH BASIC DRIVE
WAVEFORM

ACT12
EVALUATE EJECTION

ACT13
EVALUATION OK? — No

Yes

ACT16
SELECT SETTING VALUE DATA

ACT14
RESELECT DRIVE WAVEFORM

ACT15
DRIVE WITH RESELECTED DRIVE
WAVEFORM

END

# FIG. 5

SETTING VALUE DATA PROVIDING SYSTEM (50)

- CONTROL SERVER (31)
- LIQUID EJECTION DEVICE (10)
- WEB API
- PC (32)
- LIQUID EJECTION DEVICE (10)
- HTTPS
- WEB SERVER (51)
- AUTHENTICATION SERVER (52)
- FIREWALL (53)
- AP SERVER (54)
- WEB API SERVER (55)
- DB SERVER (56)
- DB (57)

EP 4 530 074 A1

# FIG. 6

AUTHENTICATION SERVER 52

LOGIN FUNCTION

DB 57

CUSTOMER DB

WHITELIST

USER DB

S/N DB

# FIG. 7

**54,55**

AP SERVER, WEB API SERVER

SETTING VALUE DATA CALCULATION FUNCTION

INK TEMPERATURE AND VISCOSITY CALCULATION ENGINE UPDATE FUNCTION

DRIVE WAVEFORM ESTIMATION ALGORITHM UPDATE FUNCTION

INK TEMPERATURE AND VISCOSITY CALCULATION ENGINE

DRIVE WAVEFORM ESTIMATION ALGORITHM

**57**

DB

COEFFICIENT DB

S/N DB

OPERATION LOG DB

MASTER DATA

# FIG. 8

DB SERVER — 56

DATA MANAGEMENT FUNCTION

DATA UPDATE FUNCTION

DB — 57

COEFFICIENT DB

S/N DB

CUSTOMER DB

MASTER DATA

USER DB

OPERATION LOG DB

USER MANAGEMENT FUNCTION

# FIG. 9

CLIENT    ACT21            SYSTEM

LOGIN PROCESSING

ACT22

USER AUTHENTICATION PROCESSING ← USER DB

ACT23

ACT24

No ← AUTHENTICATION OK?

DISPLAY ERROR MESSAGE

Yes

INPUT S/N

ACT26

ACT25

S/N COLLATION PROCESSING ← S/N DB

ACT27

ACT28

No ← COLLATION OK?

DISPLAY ERROR MESSAGE

Yes

INPUT PARAMETERS

ACT29

ACT30

ACT31

NG ← INPUT PARAMETER CHECK?

DISPLAY ERROR MESSAGE

OK

CALCULATE INK TEMPERATURE AND VISCOSITY   ACT32

ESTIMATE OPTIMAL DRIVE WAVEFORM   ACT33

CALCULATE SETTING VALUE DATA ← DEDICATED DB

ACT34

SETTING VALUE DATA

# FIG. 10

WAVEFORM SUGGESTION

Message DISPLAY AREA

COEFFICIENT DB

○ S/N DB   ● 

HEAD SELECTION:

| HEAD: | CF1B |
|---|---|

| SN No : | 200100047 |
|---|---|

| AL RANK: | R2 ▽ |
|---|---|

INK SELECTION:

| INK TYPE: | UV ▽ |
|---|---|
| INK SPECIFIC GRAVITY: | INPUT VALUE FROM 0.70 TO 3.0 |

USE CONDITION SELECTION:

| THE NUMBER OF DROPLETS: | 5 ▽ |
|---|---|
| FREQUENCY [KHZ]: | INPUT VALUE FROM 1.0 TO 30.0 |

INK TEMPERATURE AND VISCOSITY:

○ RECOMMENDED TEMPERATURE   ● DESIRED TEMPERATURE   ○ EJECTION VISCOSITY

| INK TEMPERATURE AT VISCOSITY 10 mPa·s: | 34.2 | °C |
|---|---|---|
| DESIRED INK TEMPERATURE: | 35.0 | °C |
| VISCOSITY AT DESIRED INK TEMPERATURE: | 21.6 | mPa·s |

INPUT INK TEMPERATURE AND VISCOSITY CALCULATION

| DRIVE VOLTAGE: | | CREATE WAVEFORM | CREATE REGISTER DATA |
|---|---|---|---|

HEAD AND WAVEFORM TYPE AND WAVEFORM VALUE

| WAVEFORM TYPE | ELEMENT 1 | ELEMENT 2 | | ELEMENT 10 |
|---|---|---|---|---|
| WAVEFORM VALUE | PULSE 1 | PULSE 2 | TO | PULSE 10 |

◀   ▶

# FIG. 11

# FIG. 12

ACT41

**HEAD AND INK INPUT SCREEN**

- INK SPECIFIC GRAVITY AND TYPE
- HEAD S/N AND CHARACTERISTIC VALUE
- THE NUMBER OF DROPLETS
- TEMPERATURE AND VISCOSITY

ACT43

**TEMPERATURE AND VISCOSITY INPUT SCREEN**

- INPUT DESIRED TEMPERATURE
- INPUT THREE POINTS OF TEMPERATURE
- INPUT THREE POINTS OF VISCOSITY

ACT42

**WAVEFORM ELEMENT VALUE CALCULATION**

- COEFFICIENT CALL
- AL VALUE CALCULATION
- BOOST VALUE CALCULATION
- DRIVE VOLTAGE VALUE CALCULATION

ACT44

**TEMPERATURE AND VISCOSITY CALCULATION**

ACT45

**WAVEFORM VALUE VOLTAGE CORRECTION**

- CORRECT AL VALUE, BOOST VALUE, AND DRIVE VOLTAGE VALUE

ACT47

**REGISTER CONVERSION**

- WAVEFORM VALUE
- SETTING VALUE DATA

ACT46

**EACH WAVEFORM VALUE CALCULATION**

- AL VALUE AND BOOST VALUE
- EACH WAVEFORM VALUE

25

# FIG. 13

START

ACT51
DISPLAY INPUT
SCREEN

ACT52
ACQUIRE INK SPECIFIC
GRAVITY, HEAD TYPE,
AND DRIVE CONDITION

ACT56
INPUT OF INK
TEMPERATURE AND
VISCOSITY

INPUT

NOT INPUT

B

ACT57
INPUT OF
VISCOSITY AND
TEMPERATURE

VISCOSITY
IS INPUT

ONLY
TEMPERATURE
IS INPUT

ACT58
ESTIMATE AND CALCULATE
INK VISCOSITY FROM INK
TEMPERATURE

ACT53
PRESSURE PROPAGATION
TIME ESTIMATION AND
CALCULATION

ACT54
WAVEFORM ELEMENT
ESTIMATION AND
CALCULATION

ACT55
DRIVE WAVEFORM
ESTIMATION AND
CALCULATION

A

ACT59
WAVEFORM ELEMENT
VALUE CORRECTION

ACT60
DRIVE WAVEFORM
CORRECTION

B

A

ACT61
EACH WAVEFORM VALUE
CALCULATION

ACT62
HEAD DRIVE WAVEFORM
DATA CONVERSION

END

# FIG. 14

HEAD CONTROLLER — 26

BUS BRIDGE — 261

SETTING VALUE DATA BUFFER — 2621

PRINT DATA BUFFER — 263

CONTROL SIGNAL GENERATION UNIT — 264

DRIVE CONTROL UNIT — 2651

SETTING VALUE DATA TRANSMISSION UNIT — 2661

PRINT DATA TRANSMISSION UNIT — 267

CONTROL SIGNAL TRANSMISSION UNIT — 268

INK JET HEAD — 25

POWER SUPPLY CIRCUIT — 28

27

EP 4 530 074 A1

FIG. 15

EP 4 530 074 A1

Europäisches
Patentamt

European
Patent Office

Office européen
des brevets

# EUROPEAN SEARCH REPORT

Application Number

EP 24 19 8505

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/118256 A1 (YAMAMOTO TAKAO [JP] ET AL) 20 April 2023 (2023-04-20) * paragraphs [0076], [0105] - [0113]; figures 7,12 * | 1-14 | INV. B41J2/045 |
| X | US 2023/211603 A1 (MURAYAMA TOSHIRO [JP]) 6 July 2023 (2023-07-06) * paragraphs [0049], [0052], [0053], [0074], [0076], [0079], [0098] * | 1,10,11 | |
| X | US 2022/032616 A1 (TOYOFUKU ATSUSHI [JP] ET AL) 3 February 2022 (2022-02-03) * paragraphs [0034] - [0038], [0060] - [0064]; figure 7 * | 1,10,11 | |
| A | US 2023/294397 A1 (IDE NORITAKA [JP] ET AL) 21 September 2023 (2023-09-21) * figure 14 * | 1-14 | |

TECHNICAL FIELDS
SEARCHED (IPC)

B41J

The present search report has been drawn up for all claims

| Place of search | Date of completion of the search | Examiner |
|---|---|---|
| The Hague | 31 January 2025 | Bardet, Maude |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 24 19 8505

This annex lists the patent family members relating to the patent documents cited in the above-mentioned European search report.
The members are as contained in the European Patent Office EDP file on
The European Patent Office is in no way liable for these particulars which are merely given for the purpose of information.

31-01-2025

| Patent document cited in search report | Publication date | Patent family member(s) | | Publication date |
|---|---|---|---|---|
| US 2023118256 A1 | 20-04-2023 | CN | 115991053 A | 21-04-2023 |
| | | JP | 2023060470 A | 28-04-2023 |
| | | US | 2023118256 A1 | 20-04-2023 |
| US 2023211603 A1 | 06-07-2023 | CN | 116414323 A | 11-07-2023 |
| | | JP | 2023100032 A | 18-07-2023 |
| | | US | 2023211603 A1 | 06-07-2023 |
| US 2022032616 A1 | 03-02-2022 | CN | 114055942 A | 18-02-2022 |
| | | JP | 7537158 B2 | 21-08-2024 |
| | | JP | 2022025893 A | 10-02-2022 |
| | | US | 2022032616 A1 | 03-02-2022 |
| US 2023294397 A1 | 21-09-2023 | JP | 2023135776 A | 29-09-2023 |
| | | US | 2023294397 A1 | 21-09-2023 |

EPO FORM P0459

For more details about this annex : see Official Journal of the European Patent Office, No. 12/82